# EUROPEAN PATENT APPLICATION

(11) **EP 1 884 285 A1**
(43) Date of publication of application: **06.02.2008**
(21) Application number: 07252880.5
(22) Date of filing: 20.07.2007
(51) Int. Cl.: B01L 3/00, B41M 5/24, G01N 1/06, G01N 35/00

(54) **Embedding cassette with laser marking**

(30) Priority: 20.07.2006 JP 2006198090
(71) Applicant: Seiko Instruments Inc., Chiba-shi, Chiba (JP)
(72) Inventor: Fujimoto, Koji, Chiba-shi Chiba (JP); Ito, Tetsumasa, Chiba-shi Chiba (JP); Miyatani, Tatsuya, Chiba-shi Chiba (JP)
(74) Representative: Cloughley, Peter Andrew

(57) **Abstract**

An embedding cassette to which an identification code can be engraved using a laser beam, which enables display of a clear identification code free from peeling off and unaffected by paraffin; the embedding cassette comprises a cassette body having formed thereon an open concave enclosing part having a flat plane for placing therein the biological sample, a lid part fixed freely detachable to the cassette body, which shuts the concave enclosing part, and a thin film layer provided on the flat plane, with a color at least differing in value with respect to that of the cassette body, provided that the thin.film layer displays the identification code by being engraved upon irradiating a laser beam.

## Description

The present invention relates to an embedding cassette which is used as a container for storage and substitution treatment of biological samples taken from human bodies, laboratory animals, and the like, and as a fixing stage of embedded blocks having embedded therein the substitution treated samples.

Conventionally, a microtome has been known in general as a tool for use in preparing thin section slide samples for physicochemical experiments and microscopic observations. The thin section slides are prepared by fixing thin sections about several micrometers (for instance, from 3 µm to 5 µm) in thickness on a substrate such as a glass slide and the like. The thin sections are produced by cutting an embedded block that has been prepared by embedding biological samples in an embedding agent to an extremely thin thickness as described above. An embedded block is prepared by subjecting a formalin-fixed biological sample taken out from human bodies, laboratory animals, and the like to paraffin substitution, and then solidifying the periphery thereof with paraffin to prepare a solid block. In general, such embedded blocks are prepared utilizing a special use embedding cassette.

The embedding cassette is shaped into a box comprising a cassette body and a lid member which can be fixed in a freely detachable manner to the cassette body, and is made from a material resistant to xylene and alcohol. The cassette body and the lid member are each made from a mesh material. Thus, the inside and the outside of the embedding cassette are so constituted to communicate with each other.

The method for preparing an embedded block using the embedding cassette is briefly described below.

First, a biological sample such as an organ of an experimental animal and the like is fixed with formalin, and then cut into a proper size to be placed inside the embedding cassette. That is, the biological sample placed inside the cassette body is enclosed by attaching the lid part to the cassette body. Then, the embedding cassette is immersed into a palette filled with a chemical agent, which is alcohol in this case. In this manner, the biological sample enclosed inside the embedding cassette is immersed in alcohol so that water and lipid inside the biological sample can be replaced by alcohol; that is, the sample is subjected to dehydration and degreasing treatments. Subsequently, the chemical agent inside the palette is replaced by xylene to substitute alcohol with xylene. The chemical agent inside the palette is then substituted with liquid paraffin to further replace xylene with paraffin. In this manner, biological samples whose water and lipid a=e replaced by paraffin can be prepared.

Then, the paraffin substituted biological samples are taken out of the embedding cassette, and are transferred into another container filled with liquid paraffin. The thus emptied cassette body is then used as the lid of the container. The paraffin inside the container is cooled and solidified in this state. In this manner, there can be prepared a paraffin embedded block having embedded therein the biological sample. In this case, the embedded block is adhered and connected to the bottom plane of the cassette body. Finally, the cassette body comprising the embedded block connected to the bottom plane is taken out of the container and reversed. As a result, there can be obtained an embedded block fixed to the bottom plane of the cassette body.

As described above, on preparing an embedded block, the embedding cassette is used not only as a container for subjecting the biological samples to the dehydration and degreasing treatment and the substitution treatment, but also as a fixing stage of the embedded block. The reason for using the embedding cassettes in two scenes in this manner is for preventing confusion or mixing up of biological samples from occurring when treating a large number of biological samples at once. In particular, since the quality control of the embedded blocks is important for carrying out accurate experiments and observations, special attention is paid concerning the mixing up and the like of the samples.

In order to accomplish accurate quality control, an identification code is recorded to the embedding cassette for recognizing the type and the like of the biological sample embedded inside the embedded block. Among various methods for recording the identification code, well known is a method for printing characters using an ink-jet printer (see for example, JP-A-2002-365184). According to this method, an identification code of desired size can be printed clearly and efficiently on the embedding cassette. As the ink for use in such a case, in general, an ink resistant to organic solvents is used by taking into consideration that the embedding cassette might be exposed to various types of chemicals.

However, the method above still had problems as below to be solved.

More specifically, the method for printing identification codes on the embedding cassettes was favorable from the viewpoint that characters and the like can be printed easily and clearly at a desired size; however, on the other hand, there were possibilities that the ink might be peeled off when the printed part was subjected to intense rubbing. In particular, inks resistant to organic solvents tended to easily peel off. Such a case of peeling off becomes a detrimental problem because an accurate quality control of the embedded block is unfeasible.

Furthermore, the conventional methods simply print the characters. Thus, the inconvenience was that if paraffin should adhere onto the printed surface during the preparation of the embedded block, the printed identification code was covered and became indiscernible. Accordingly, it was required to manually remove off the paraffin. Furthermore, there was another inconvenience that the identification code went off together with the paraffin on peeling off.

The present invention has been made under such circumstances, and an objective thereof is to provide an embedding cassette to which an identification code can be engraved using a laser beam, on which a clear identification code can be displayed free from peeling off and without being affected by paraffin.

In order to solve the aforementioned problems, this invention provides the following solutions.

The embedding cassette according to the invention is an embedding cassette which is used simultaneously as a container for performing a paraffin substitution treatment of biological sample and as a mounting stage of an embedded block for mounting thereon the embedded block that has been prepared by embedding the paraffin substituted biological sample in an embedding agent, which comprises a cassette body having formed thereon an open concave enclosing part having a flat plane for placing therein the biological sample, a lid part fixed freely detachably to the cassette body, which shuts the concave enclosing part, and a thin film layer provided on the flat plane, with a color at least differing in value with respect to that of the cassette body, provided that the thin film layer displays the identification code by being engraved upon irradiating a laser beam.

The embedding cassette according to the invention is utilized not only as a container for paraffin substitution treatment of biological samples, but also as a mounting stage for the embedded block in the case the paraffin substituted biological sample is embedded in an embedding agent to prepare the embedded block. In such a case, a thin film layer to be graved by the irradiation of a laser beam is provided by film deposition, coating, and a like means on the flat plane formed on the surface of the cassette body. Accordingly, in the case of preparing an embedded block, this allows the operator to engrave in advance the necessary information of the biological sample (for instance, the type of the laboratory animal, the type or kind of the organs, and the like) as an identification code by irradiating a laser beam to the thin film layer by using a laser marker device and the like.

In particular, the method of the present invention is different from the known methods in which the identification code is simply printed, in that the thin film layer is graved by using a laser beam to engrave the identification code. Accordingly, the identification code is free from being rubbed off due to friction and the like which occurs during the operation of preparing the embedded block. This enables accurate quality control of the embedded block. Furthermore, the identification code can be engraved in a shorter period of time because a laser beam is used. Accordingly, the working efficiency can be improved. Moreover, since the identification code can be engraved in a non-contact manner, the identification code can be displayed irrespective of the surface roughness of the thin film layer. Furthermore, no printing failure occurs even if the printing plane and the printing head plane are not strictly in the same level. Thus, the cassette body can be set for the printing without taking excessive care.

Further, the color of the thin film layer differs at least in value from that of the cassette body. Thus, the identification code that has been engraved by shaving the thin film layer can be displayed with a value differing from that of the thin film layer which serves as the background color. That is, the value of the identification code can be differed from that of the background color, and thereby the identification code can be displayed by using the difference in value. For instance, an identification code may be displayed with a pale green color near to white on a dark green background color near to black. In this manner, high contrast display can be realized to assure clear visibility.

Moreover, since high visibility is assured by taking advantage of the difference in value between the identification code and the background color as described above, even if paraffin should remain to some extent on the thin film layer during the preparation of an embedded block, the identification code can be more clearly accepted as compared with the conventional ones. Thus, additional manual operation for shaving off paraffin can be omitted to further improve the operability.

As described in the forgoing, the embedding cassette according to the invention enables engraving an identification code by using a laser beam; hence, the identification code can be clearly displayed while preventing it from being peeled off and yet free from the effect of paraffin.

In accordance with another aspect of the invention, the embedding cassette is characterized in that the color of the thin film layer is lower in value as compared with that of the cassette body.

In the embedding cassette of the invention, the color of the thin film layer is provided at a value lower than that of the cassette body; i.e., it is provided at a dark color near to black. Thus, the identification code can be displayed at a brighter color with respect to the dark colored background. Background color can be distinctly differed from the identification code in value, and t.he visibility can be further improved.

Furthermore, since the thin film layer can be provided at a color darker than that of the cassette body, even if white colored paraffin should adhere on the engraved identification code, the identification code appears as a further brighter pale color and thereby a high contrast can be realized. Accordingly, the visibility remains unaffected.

In accordance with yet another aspect of the invention, the embedding cassette of the invention above may more specifically be such comprising a thin film layer provided with a color having a value (V) as defined by JIS-Z8102 of 6.0 or lower, and a cassette body provided with a color having the value (V) as defined by JIS-Z8102 of 6.5 or higher.

In the embedding cassette of the invention, the thin film layer has a value (V) as defined by JIS-Z8102 of 6.0 or lower, for instance, beni-iro (carmine-like color; color code #D71345), shin-ryoku (deep green-like color; color code #005931), kon-ai (pale indigo-like color; color code #464A88), shikon (blue purple-like color; color code #411445), black, and the like. Furthermore, the cassette body is provided with a pale color having a value (V) of 6.5 or higher, such as sakura-iro (pale rose-like color; color code #FEEEED), flesh, green, sky blue, white, and the like. By thus enabling display of the background with a darker color while displaying the identification code with a pale color, the visibility of the identification code can be further increased by the value (or lightness) contrasting effect. In particular, it is preferred to set the color of the thin film layer to black, whose value (V) is 1.5, while setting the color of the cassette body to white, whose value (V) is 9.5.

According to a further aspect of the invention, the embedding cassette as described in one of the aspects above is characterized in that the cassette body and the thin film layer are each made from a material having resistance against xylene and alcohol.

Since the embedding cassette according to the invention comprises a cassette body and a thin film layer formed by a material having resistances against xylene and alcohol (for instance, polyacetal resin and fluororesin), it remains unaffected by xylene or alcohol even in cases it is used for the biological samples in steps prior to the paraffin substitution step. Thus, the durability of the cassette can be improved, and clear display of the identification code can be maintained at the same time.

In accordance with a yet other aspect of the invention, the embedding cassette as described in one of the aspects above is characterized in that the thin film layer is obtained by coating a thermosetting resin containing a coloring agent.

In the embedding cassette of the invention, the thin film layer can be provided by simply applying a thermosetting resin containing a coloring agent on the flat plane of the cassette body; accordingly, the embedding cassette can be produced efficiently at a low cost.

In accordance with a still other aspect of the invention, the embedding cassette as described in any of the aspects above is characterized in that the thin film layer has a film thickness of from 5 µm or more but not more than 500 µm.

Since the thin film layer of the embedding cassette of the invention is provided at a thickness of 5 µm or more, sufficiently high strength is assured as a thin film layer, and there is no fear of causing peeling off or defects during or after engraving the identification code with a laser beam. The product reliability can be improved in this manner.

Furthermore, because the film thickness of the thin film layer is not more than 500 µm, laser beams of commercially available laser marker devices (for example, carbon dioxide gas laser marker device) can easily and surely grave the thin film layer to engrave the identification code. If the film thickness should become thicker than this range, the laser beam penetrates the thin film layer, thereby widening the printing width and leading to the deformation or blurring of the characters upon engraving.

In accordance with a further aspect of the invention, the embedding cassette as described in one of the aspects above is characterized in that the thin film layer has a mirror finished surface.

The surface of the thin film layer of the embedding cassette of the invention is mirror finished by texturing, luster treatment, or a like treatment. Thus, this avoids paraffin adhesion on the surface during the preparation of an embedded block; or, should paraffin adhere on the surface, it can be easily removed off.

According to an aspect of the invention, there is provided an embedding cassette which is used simultaneously as a container for performing a paraffin substitution treatment of biological samples and as a mounting stage of an embedded block for mounting thereon the embedded block that has been prepared by embedding the paraffin substituted biological sample in an embedding agent, comprising: a cassette body having formed thereon an open concave enclosing part having a flat plane for placing therein the biological sample, and a lid part fixed freely detachable to the cassette body, which shuts the concave enclosing part, provided that the cassette body is made by using two differently colored polyacetal resins differing in value from each other, which displays the identification code by being graved along a laser beam irradiated onto the flat plane.

According to the further aspect of the invention, there is provided an embedding cassette which is used as a container for subjecting a biological sample to paraffin substitution treatment, and at the same time, as a mounting stage for preparing the embedded block by embedding the paraffin substituted biological sample in an embedding agent. The cassette body is formed by laminating two layers of differently colored polyacetal resins differing in value. The polyacetal resins are graved by the irradiation of a laser beam. Accordingly, in the case of preparing the embedded block, the operator irradiates a laser beam to the first layer of polyacetal resin in advance by using a laser maker device and the like to engrave the necessary information on the biological sample (for instance, the type of the laboratory animal, the type or kind of the organs, and the like) as an identification code by irradiating a laser beam.

In particular, this method differs from the known methods in which the identification code is simply printed, but the polyacetal resin in the first layer is graved with a laser beam to engrave the identification code. Accordingly, the identification code does not peel off due to friction and the like which occurs during the operation of preparing the embedded block. This enables accurate quality control of the embedded block. Furthermore, because the identification code can be engraved by using a laser beam, the operation can be completed in a shorter period of time. This increases the operation efficiency. Moreover, since the identification code can be engraved in a non-contact manner, the identification code can be displayed irrespective of the surface roughness of the thin film layer. Furthermore, no printing failure occurs even if the printing plane and the printing head plane is not strictly in the same level, Thus, the cassette body can be set for the printing without taking care in excess.

The colors of the laminated polyacetal resins are differed in value. Accordingly, the identification code obtained by engraving the polyacetal resin in the first layer (which is the color of the polyacetal resin in the second layer) can be displayed at a value differing from that of the polyacetal resin in the first layer which is the background color. Thus, the value can be changed between the identification code and the background color, and the identification code can be displayed by taking advantage of this difference in value. For instance, an identification code can be displayed by a pale green color near to white against a deep green color near to black as the background color. Accordingly, by contrast, clear visibility can be assured.

Furthermore, as described above, should paraffin remain on the cassette body to some extent during the preparation of the embedded block, a high visibility is assured by taking advantage of the difference in value between the identification code and the background color. Accordingly, the identification code can be more clearly discerned than those known heretofore. This increases handling efficiency because the process for shaving off the paraffin manually can be omitted. As described in the foregoing, the embedding cassette of the invention enables engraving the identification code using a laser beam; thereby clear identification code can be engraved without being affected by paraffin, while preventing peeling off from occurring on the identification code.

Embodiments of the present invention will now be described by way of further example only and with reference to the accompanying drawings, in which:
Figure 1 is an oblique view of an embedded block produced by using an embedding cassette according to the invention;
Figure 2 is an upper view showing an example of an embedding cassette according to the invention;
Figure 3 is a cross section view of the embedding cassette shown in Fig. 2;
Figure 4 is an upper view of the cassette body constituting the embedding cassette shown in Fig. 2;
Figure 5 is a cross section view along D-D of the cassette body shown in Fig. 4;
Figure 6 is an upper view of the lid part constituting the embedding cassette shown in Fig. 2;
Figure 7 is a cross section view along E-E of the lid part shown in Fig. 6;
Figure 8 shows a state in which a laser beam is irradiated to the thin film layer of the embedding cassette shown in Fig. 2 to engrave the identification code by graving;
Figure 9 shows an example of an engraved identification code;
Figure 10 shows a process step for producing an embedded block using the embedding. cassette shown in Fig. 2, in which a biological sample is enclosed in the embedding cassette and the embedding cassette is further placed inside a palette filled with a chemical agent;
Figure 11 shows a process step for producing an embedded block using the embedding cassette shown in Fig. 2, in which the biological sample subjected to paraffin substitution treatment as shown in Fig. 10 is taken out from the cassette body and is transferred into an embedding boat filled with liquid paraffin.
Figure 12 shows a process step for producing an embedded block using the embedding cassette shown in Fig. 2, in which the vacated cassette body after the state shown in Fig. 11 is mounted on the step part of the embedding boat; and
Figure 13 shows a process step for producing an embedded block using the embedding cassette shown in Fig. 2, in which the paraffin is solidified to produce the embedded block after the state shown in Fig. 12, and the cassette body is taken out from the embedding boat.

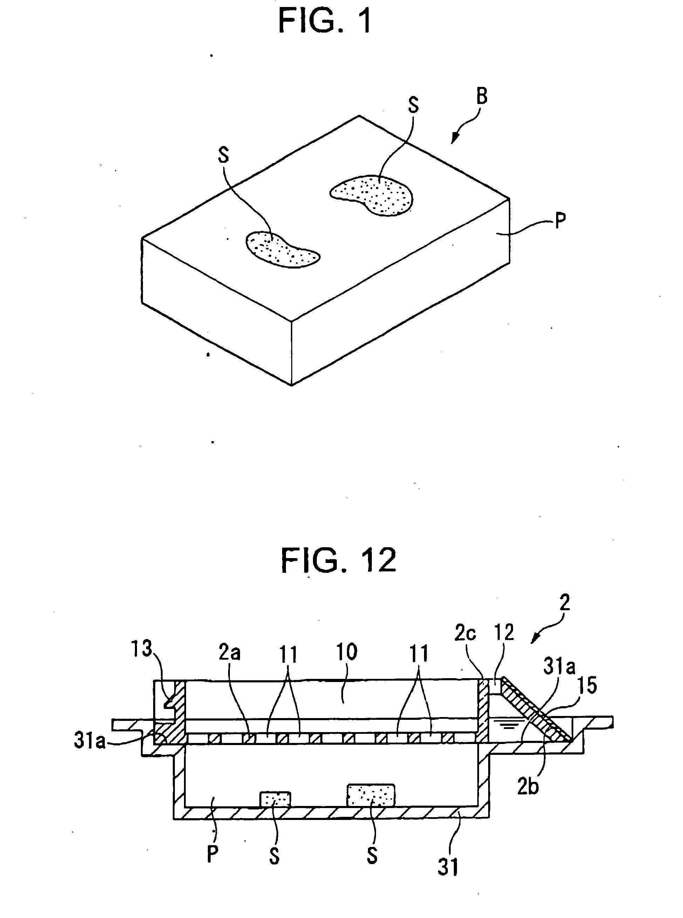

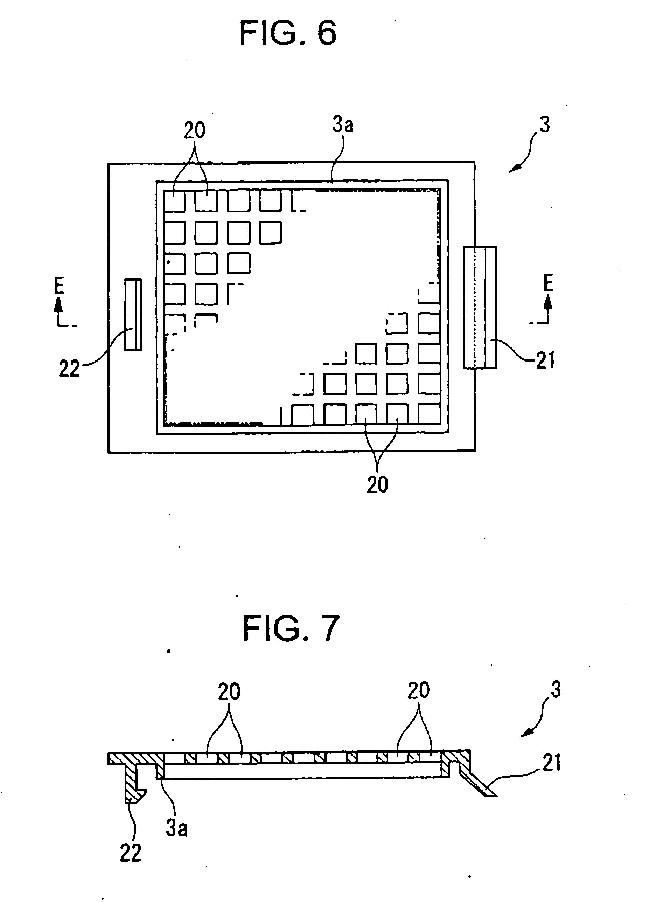

An embodiment of an embedding cassette according to the invention is described below by making reference to Figs. 1 to 13.

First referring to Fig. 1, a known method for inspecting and observing a biological sample S utilizing thin section slides comprises thinly cutting an embedded block B, which has been prepared by embedding the biological sample S in paraffin P as the embedding agent, into extremely thin slices 3 to 5 µm in thickness to prepare thin sections, and then fixing the thin sections on a substrate such as a glass slide.

On preparing an embedded block B, the embedding cassette 1 according to the invention is used as a container for subjecting a biological sample to paraffin substitution treatment, and at the same time, as a mounting stage for preparing the embedded block by embedding the paraffin substituted biological sample in an embedding agent. The details of the embedding cassette 1 and the preparation procedure of the embedded block B utilizing the embedding cassette 1 are described below.

As the biological sample S, for instance, there can be used a tissue of organs and such taken out from human bodies and laboratory animals and the like, which is properly selected depending on the fields, such as the medical, pharmaceutical, food, biological, and the like. Moreover, those samples are obtained by subjecting them to paraffin substitution treatment after the dehydration and degreasing treatments.

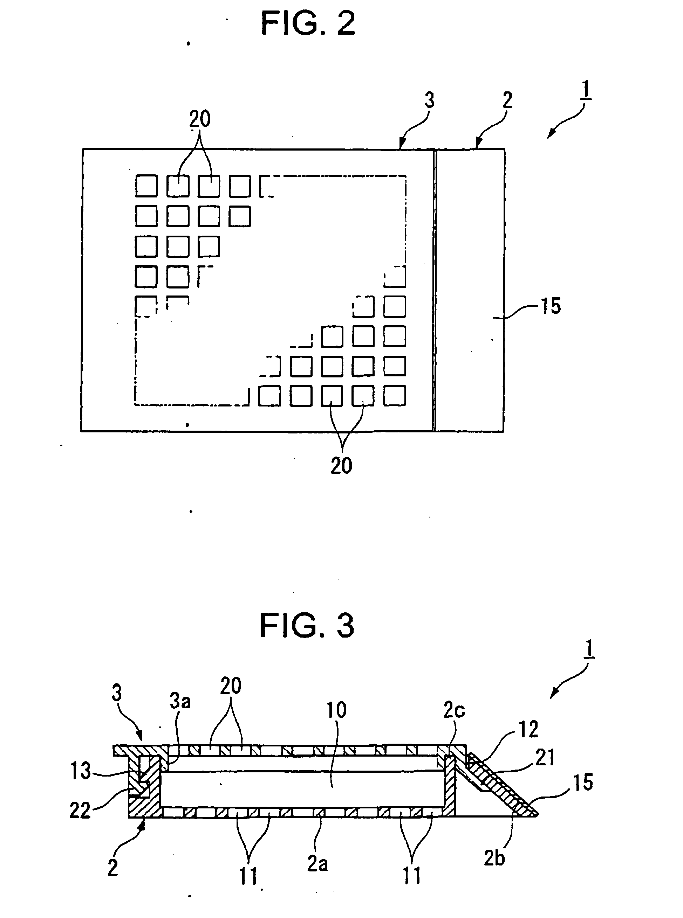

Referring to Figs. 2 and 3, the embedding cassette 1 according to the present example comprises a cassette body 2 having provided therein an enclosing concave part 10 as an opening, for enclosing a biological sample S, and a lid part 3 which is fixed in a freely detachable manner with respect to the cassette body 2, so that it may shut the enclosing part 10. The cassette body 2 and the lid part 3 are made from polyacetal, fluororesin, and/or a like material having resistance against xylene and alcohol.

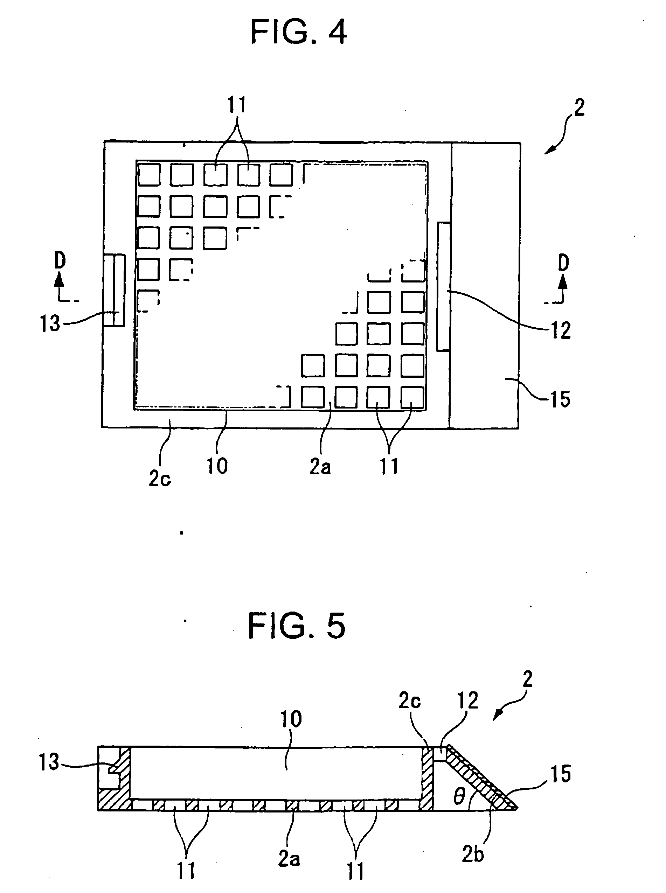

As seen in Figs. 4 and 5 from the upper side, the cassette body 2 is formed in such a manner that it has a rectangular top shapes, and the upper part corresponds to the opening of the concave enclosing part 10. In the bottom plane 2a, plural penetrating holes 11 are formed in an array-like arrangement, such that the inside and the outside of the concave enclosing part 10 may communicate with each other via the penetrating holes 11. Furthermore, a flat plane 2b, whose surface is flattened, is formed on one end of the cassette body 2 according to the present example. The flat plane 2b is provided as a slope making a predetermined angle θ with respect to the bottom plane 2a of the cassette body 2.

Furthermore, in the side wall 2c surrounding the concave enclosing part 10, an insertion hole 12 for inserting therein an engaging piece 21 of the lid part 3, which is to be stated hereinafter, is provided to the part adjacent to the flat plane 2b. Further, in the side opposed to the insertion hole 12 of the side wall 2c with the concave enclosing part 10 interposed between them, a protruded part 13 is formed, so that engaging claws 22 of the lid part 3 may be engaged thereto.

A thin film layer 15 is provided on the flat plane 2b described above. Similar to the cassette body 2 and the lid part 3, the thin film layer 15 according to the present example is formed by film deposition of a resin having resistance against xylene and alcohol, such as a fluororesin and/or a polyacetal resin. In this case, the film thickness of the thin film layer 15 is so controlled that it may fall in a range of 5 µm or more, but not more than 500 µm. Furthermore, the thin film layer 15 displays an identification code C by being graved along a laser beam L irradiated from a not shown laser marker device and the like. This will be explained in detail hereinafter.

The thin film layer 15 is provided at a color at least differing in value with respect to the color of the cassette body 2. In the present example, the color of the thin film layer 15 is provided at a value lower than the color of the cassette body 2. More specifically, the thin film layer 15 is provided with a color having a value (V) as defined by JIS-Z8102 of 6.0 or lower, i.e., with deep green color having a value of V=3.0, whereas the cassette body 2 and the lid part 3 is provided with a color having a value (V) as defined by JIS-Z8102 of 6.5 or higher, i.e., green (V=6.5).

Referring to Figs, 6 and 7, the lid part 3 is a plate member formed in such a manner that it appears as a rectangular shape as viewed from the top, and at such a size that it completely covers the side wall 2c of the concave enclosing part 10 provided to the cassette body 2. Furthermore, a step part 3a surrounding in a rectangular shape is formed on the lower plane of the lid part 3. The step part 3a is formed at such a size that it may be inside the concave enclosing part 10 of the cassette body 2 while keeping contact with the side wall 2c. Thus, in the case the lid part 3 is superposed on the cassette body 2, the step part 3a is enclosed inside the concave enclosing part 10, such that the lid part 3 may not be displaced in the horizontal direction.

In addition, similar to the case of the cassette body 2, a plurality of penetrating holes 20 formed in an array-like arrangement is provided inside the area surrounded by the step part 3a. Thus, in the case the lid part 3 is superposed on the cassette body 2, the inside and the outside of the concave enclosing part 10 can communicate with each other via the penetrating holes 20 provided to the side of the lid part 3.

Furthermore, as described above, to the lower plane of the lid part 3 is provided an engaging piece 21 to be inserted into the insertion hole 12 provided to the cassette body 2, which has an engaging claw 22 that engages with the protruded part 13 of the cassette body 2 upon insertion. The engaging piece 21 is so formed that it may protrude from one end at approximately the same angle θ as that made by the bottom plane 2a and the flat plane 2b of the cassette body 2, and after it is inserted into the insertion hole 12, the plane thereof is brought into contact with the back side of the flat plane 2b in such a manner that the lid part 3 may be positioned. Further, the engaging claw 22 is formed on the lower plane in such a manner that it is protruded in a direction approximately perpendicular to the lower plane of the lid part 3, and has a hooked front end so that it may be hooked and engaged with the protruded part 13.

As described above, the lid part 3 is so designed that, by using the step part 3a and the engaging piece 21, it may be superposed to a predetermined position with respect to the cassette body 2, and attached to the cassette body 2 at the same time by engaging the engaging claws 22 with the protruded part 13.

Then, the case of producing an embedded block B using the embedding cassette 1 is described below.

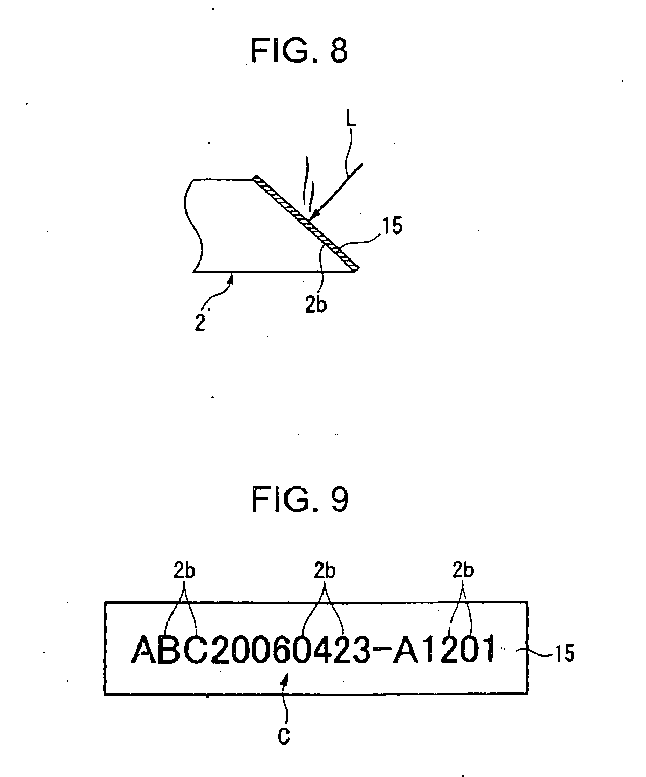

First, the operator prepares a formalin fixed biological sample S and an embedding cassette 1 for enclosing the biological sample S at the same time as shown in Figs. 2 and 3. Subsequently, on the embedding cassette 1, the operator conducts an operation for displaying the necessary information related to the biological sample S, such as the type of the laboratory animal, the type or kind of the organs, and the like, as an identification code C. More specifically, as shown in Fig. 8, a commercially available laser marker device and the like is used to irradiate laser beam L onto the thin film layer 15. Then, the thin film layer 15 is graved along the laser beam L. In this manner, as shown in Fig. 9, necessary information is engraved on the embedding cassette 1 as an identification code C (ABC20060423-A1201).

After the identification code C is engraved to the embedding cassette 1, the lid part 3 is detached from the cassette body 2. Then, after cutting the biological sample S corresponding to the engraved identification code C into a proper size, the biological sample 5 is enclosed inside the concave enclosing part 10 of the cassette body 2. Subsequent to the enclosure, the lid part 3 is attached to the cassette body 2 to enclose the biological sample S therein. That is, while keeping the engaging piece 21 of the lid part 3 inside the insertion hole 12 of the cassette body 2, the lid part 3 is gradually superposed to the cassette body 2. In this manner, the step part 3a of the lid part 3 gradually enters from the engaging piece 21 side to the inside of the concave enclosing part 10 of the cassette body 2. By thus positioning the lid part 3, the lid part 3 can be accurately superposed on the cassette body 2. Finally, the engaging claw 22 of the lid part 3 is engaged with the protruded part 13 of the cassette body 2 to surely attach the lid part 3 onto the cassette body 2 and close the opening of the concave enclosing part 10.

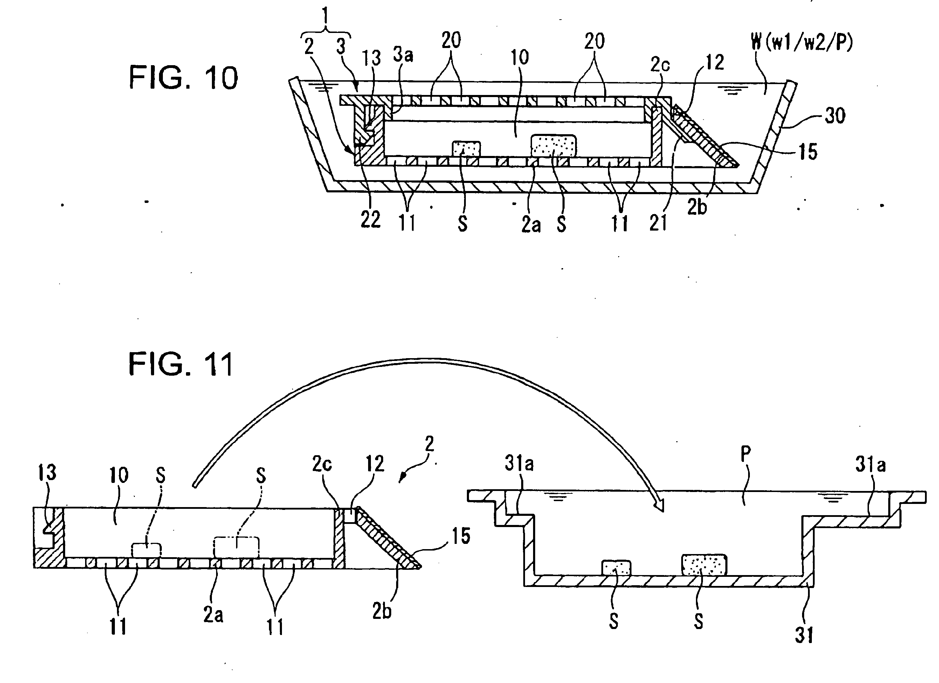

After enclosing the biological sample S, the biological sample S is subjected to paraffin substitution treatment. First, as shown in Fig. 10, the embedding cassette 1 is immersed in alcohol w1, which is a chemical W, filled in a palette 30. In this case, since the inside of the concave enclosing part 10 is communicated with the outside via the penetrating holes 11 and 20 each formed in the cassette body 2 and the lid part 3, the alcohol w1 flows into the concave enclosing part 10. Accordingly, the inner water and lipid of the biological sample 5 are substituted by alcohol w1, i.e., the sample S undergoes dehydration treatment and degreasing treatment.

Subsequently, the chemical W inside the palette 30 is replaced by xylene w2, to thereby substitute the previously substituted alcohol w1 with xylene w2. Finally, the chemical W inside the palette 30 is replaced by liquid paraffin P. In this manner, a biological sample S whose water and lipid are substituted by paraffin can be prepared.

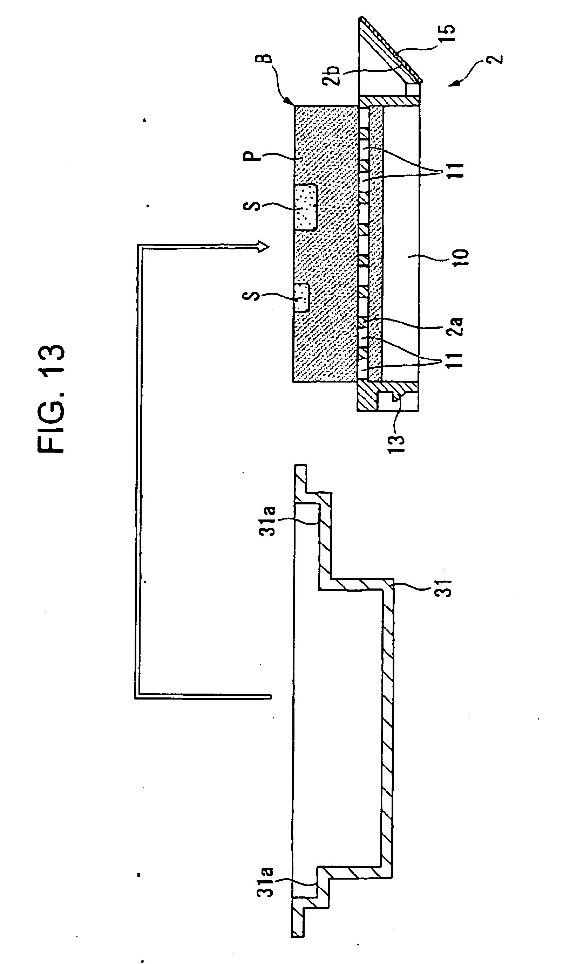

Upon completion of the operation of paraffin substitution, the lid part 3 is detached from the cassette body 2 as shown in Fig. 11. In addition, an embedding boat 31 having a step part 31a and filled with liquid paraffin P is prepared. Then, at the same time with the biological sample S is taken out from the concave enclosing part 10 of the cassette body 2, the thus taken out biological sample S is enclosed inside the embedding boat 31 so that it may be immersed in paraffin P. Simultaneously, as shown in Fig. 12, the vacant cassette body 2 is mounted on the step part 31a of the embedding boat 31 to cap the embedding boat 31. In this case, the amount of paraffin P is so adjusted that the paraffin P may enter inside the concave enclosing part 10 formed in the cassette body 2. The embedding boat 31 is cooled in this state to cool and solidify the paraffin P.

In this manner, an embedded block B having embedded therein the biological sample S can be prepared. In this case, the embedded block B is adhered and connected to the bottom plane 2a of the cassette' body. 2. Finally, as shown in Fig. 13, the cassette body 2, to which the embedded block B is connected by the bottom plane 2a, is taken out from the embedding boat 31 and turned upside down. As a result, a solidified embedded block B can be obtained on the bottom plane 2a of the cassette body 2.

As described in the foregoing, in the case of preparing the embedded block B, the embedding cassette 1 is used as a container for the paraffin substitution treatment of the biological sample S, and as a mounting stage of the embedded block B. Thus, because the embedding cassette 1 is used in two scenes, even if large number of biological samples S should be treated at once, the confusion among the biological samples S can be prevented from occurring. Furthermore, since the cassette body 2 displays the identification code C relevant to the biological sample S as shown in Fig. 9, accurate quality control can be performed.

In particular, differing from a conventional method in which an identification code C is simply printed, the present invention utilizes a laser beam L to grave the thin film layer 15 to engrave the identification code C; thereby the identification code C cannot be peeled off due to friction and the like that may occur during the preparation of the embedded block B. Accordingly, the quality control of the embedded block B can be carried out accurately.

In addition, the operation can be completed in a shorter period of time because the identification code C can be engraved by using a laser beam L. Thus, the operation efficiency can be improved. Furthermore, because the identification code C can be engraved in a non-contact manner, the identification code C can be displayed irrespective of the surface roughness of the thin film layer 15. Furthermore, no printing failure occurs even if the printing plane and the printing head plane is not strictly in the same level. Accordingly, the thin film layer 15 can be deposited on the flat plane 2b without taking excessive care.

The color of the thin film layer 15 differs from that of the cassette body 2 at least in value. Thus, the identification code C engraved by graving the thin film layer 15 can be displayed with a color differing in value from that of the thin film layer 15 which serves as the background color. Accordingly, the brightness of the identification code C and the background color can be changed, and thereby the identification code C can be displayed by using the difference in value. In this manner, high contrast display can be realized to assure clear visibility.

In particular, in the case of the present example, the thin film layer 15 is provided as shin-ryoku (deep green-like) color against green color of the cassette body 2. That is, the color of the thin film layer 15 is a darker color near to black as compared with the color of the cassette body 2. In this manner, the identification code C can be displayed as a color brighter than the background color provided with a dark color. Thus, a distinct value difference can be given between the background color and the identification code C to further improve the visibility. Moreover, since shin-ryoku has a value (V) of 3.0 and green has a value (V) of 6.5, a clearer contrast is attained by the contrasting effect. Thus, the identification code C can be more clearly displayed and easily discerned.

Furthermore, should paraffin P remain to some extent on the thin film layer 15 during the preparation of the embedded block B, as described above, since high visibility of the identification code C is assured by taking advantage of the value difference between the identification code C and the background color, the identification code C can be more clearly observed as compared with the conventional cases. Accordingly, the additional manual operation for shaving off paraffin may be omitted so as to further improve the operability. In addition, should paraffin P be shaved off, the identification code C is engraved, so differently from the conventional cases, it remains without being peeled off.

Furthermore, even if a white-colored paraffin P adheres to the engraved identification code C, the identification code C is further contrasted because it is provided as a brighter pale color. Thus, the visibility remains unaffected.

The thin film layer 15 and the cassette body 2 according to the present example are both formed by a material having resistance against xylene and alcohol. Thus, they are unaffected by xylene or alcohol used for the paraffin substitution treatment. Thus, the durability is improved and a clear display of the identification code C is maintained.

In addition, since the thin film layer 15 according to the present example is provided at a film thickness of 5 µm or more, sufficiently high strength as a thin film layer is assured. Thus, there are no possibilities of causing peeling off or defects on the thin film layer 15 during or after engraving the identification code C by using the laser beam L. Thus, the reliability of the product can be improved. Furthermore, since the thin film layer 15 should be formed at a film thickness of 500 µm or less, the laser beam L emitted by any commercially available laser marker device (for example, carbon dioxide gas laser marker device) can be utilized to easily and surely grave the thin film layer 15 to engrave the identification code C. On the other hand, should the film thickness exceed the range above, the line becomes wider to deform or blur the engraved characters.

As described in the foregoing, the embedding cassette 1 as described in the present example enables engraving the identification code C using a laser beam L, thereby enabling the display of the identification code C without being influenced by paraffin P and yet preventing peeling and falling off from occurring.

The technical range of the present invention is not only limited to the example above, and various modifications may be made so long as they do not deviate from the scope of the invention.

For instance, after film-depositing the thin film layer 15 in the example above, mirror finishing may be applied by texturing, luster treatment, or a like treatment. In this manner, the adhesion of paraffin P onto the surface of the thin film layer 15 may be further prevented from occurring, or should paraffin P adhere on the surface, the paraffin P can be more easily taken off.

Furthermore, in the example above, the description has been given specifically on'the case the thin film layer 15 had been deposited on the flat plane 2b; however, the invention is not only limited to film deposition. For instance, a thermosetting resin containing a coloring agent may be applied to the surface of the flat plane 2b to provide the thin film layer 15. In this manner, the embedding cassette 1 maybe produced more efficiently and at a lower cost. Particularly preferred is to use a colored thermosetting resin prepared by adding an inorganic pigment in a one-liquid type epoxy resin adhesive. By using the thermosetting resin, resistance against xylene is assured.

In the example above, the color of the thin film layer 15 was set to shin-ryoku, and the cassette body 2 was provided with green color, but the combination of the colors is not limited thereto. Colors at least differing in value maybe freely selected. However, preferred is to select a color having a value (V) as defined by JIS-Z8102 of 6.0 or lower for the thin film layer 15, and to select a color with value (V) or 6.5 or higher for the cassette body 2. Among such colors, more preferred is to use black having a value (V) of 1.5 for the thin film layer 15, and to use white having a value (V) of 9.5 as the cassette body 2.

In addition, in the example above, the flat plane 2b was provided as a slope, but the invention is not limited thereto, and so long as it is formed on the surface of the cassette body 2, it need not be a slope and may be provided at any position.

Moreover, the example above was provided in such a constitution that the thin film'layer 15 was provided on the cassette body 2 and that the identification code C was displayed by graving the thin film layer 15 using a laser beam L; however, the thin film layer 15 may be omitted and the embedding cassette 1 may be constituted by only a cassette body 2 and a lid part 3.

That is, in this case, the cassette body 2 may be prepared by two-color molding using two polyacetal resins differing in value. More specifically, two polyacetal resins differing in value are laminated into two layers to mold the cassette body 2. These polyacetal resins are graved by the irradiation of a laser beam L. Accordingly, in the case of preparing an embedded block B, the operator irradiates the laser beam L to the polyacetal resin L of the first layer in advance to thereby engrave the identification code C.

In this case, the colors of the laminated polyacetal resins are each differed in value. Accordingly, the identification code C (displaying the color of the polyacetal resin in the second layer) obtained by graving the polyacetal resin in the first layer can be displayed by a color differing in value of the polyacetal resin of the first layer also serving as the background color. Thus, similar to the case of the thin film layer 15, the difference in value is utilized to display the identification code C with clear visibility being assured.

The aforegoing description has been given by way of example only and it will be appreciated by a person skilled in the art that modifications can be made without departing from the scope of the present invention.

### Explanation of the symbols

- B: embedded block
- C: identification code
- L: laser beam
- P: paraffin (embedding agent)
- S: biological sample
- 1: embedding cassette
- 2: cassette body
- 2a: bottom plane of the cassette body
- 2b: flat plane of the cassette body
- 3: lid part
- 10: enclosing concave part
- 15: thin film layer

## Claims

1. An embedding cassette which is used simultaneously as a container for performing a paraffin substitution treatment of biological sample and as a mounting stage of an embedded block for mounting thereon the embedded block that has been prepared by embedding the paraffin substituted biological sample in an embedding agent, comprising :
a cassette body having formed thereon an open concave enclosing part for placing therein the biological sample and having a flat plane, a lid part fixed freely detachably to the cassette body, which shuts the concave enclosing part, and
a thin film layer provided on the flat plane, with a color at least differing in value with respect to that of the cassette body,
provided that the thin film layer displays the identification code by being engraved upon irradiating a laser beam.

2. An embedding cassette as claimed in Claim 1,
wherein the color of the thin film layer is lower in value as compared with that of the cassette body.

3. An embedding cassette as claimed in Claim 2,
wherein the thin film layer is provided with a color having a value (V) as defined by JIS-Z8102 of 6.0 or lower, and the cassette body has a color having a value (V) as defined by JIS-Z8102 of 6.5 or higher.

4. An embedding cassette as claimed in one of Claims 1 to 3,
wherein the cassette body and the thin film layer are each made of a material having resistance against xylene and alcohol.

5. An embedding cassette as claimed in one of Claims 1 to 4,
wherein the thin film layer is a coated thermosetting resin containing a coloring agent.

6. An embedding cassette as claimed in one of Claims 1 to 5,
wherein the thin film layer has a film thickness of 5 µm or more but not more than 500 µm.

7. An embedding cassette as claimed in one of Claims 1 to 6,
wherein the thin film layer has a mirror finished surface.

8. An embedding cassette which is used simultaneously as a container for performing a paraffin substitution treatment of biological samples and as a mounting stage of an embedded block for mounting thereon the embedded block that has been prepared by embedding the paraffin substituted biological sample in an embedding agent, comprising:
a cassette body having formed thereon an open concave enclosing part for placing therein the biological sample and having a flat plane, and
a lid part fixed freely detachably to the cassette body, which shuts the concave enclosing part,
provided that the cassette body is made by using two differently colored polyacetal resins differing in value from each other, and displays the identification code by being graved along a laser beam irradiated onto the flat plane.
